# EUROPÄISCHE PATENTSCHRIFT

(11) **EP 2 461 194 B1**
(45) Veröffentlichungstag und Bekanntmachung des Hinweises auf die Patenterteilung: **01.08.2018**
(21) Anmeldenummer: 12157777.9
(22) Anmeldetag: 18.12.2009
(51) Int. Cl.: G02B 6/255, H01S 3/067

(54) **Spleißverbindung zwischen zwei optischen Fasern sowie Verfahren zum Herstellen einer solchen Spleißverbindung**
Splice connection between two optical fibres and method for producing such a splice connection
Dispositif de raccordement entre deux fibres optiques ainsi que procédé de fabrication d'un tel dispositif de raccordement

(30) Priorität: 23.12.2008 DE 102008062847
(43) Veröffentlichungstag der Anmeldung: 06.06.2012
(62) Teilanmeldung aus: 09810740.2
(73) Patentinhaber: TRUMPF Laser GmbH, 78713 Schramberg (DE)
(72) Erfinder: Kumkar, Malte, 99425 Weimar (DE); Grusemann, Ulrich, 82131 Gauting (DE); Kozak, Marcin Michal, 14513 Teltow (DE)
(74) Vertreter: Patentanwälte Geyer, Fehners & Partner mbB

(56) Entgegenhaltungen:
- DE-A1- 3 833 369
- DE-A1- 4 102 459
- DE-C1- 3 407 862
- DE-C1- 4 102 582
- JP-A- 56 060 410
- JP-A- 61 219 010
- US-A1- 2007 036 499
- US-B1- 6 428 217

## Beschreibung

Die vorliegende Erfindung betrifft eine Spleißverbindung zwischen zwei optischen Fasern, die jeweils einen Faserkern und einen an diesem anliegenden Fasermantel aufweisen. Ferner betrifft die vorliegende Erfindung ein Verfahren zur Herstellung einer solchen Spleißverbindung.

Wenn die Fasern zur Führung hoher optischer Leistung mit hoher Strahlqualität ausgelegt sind, besteht die Schwierigkeit der erhöhten Empfindlichkeit gegenüber Fehlanpassungen und Biegungen, die zum Beispiel nachteilig dazuführen können, daß erhöhte Verluste für das im Faserkern geführte Licht auftreten und/oder daß es zu einer unerwünschten Kopplung zwischen verschiedenen im Faserkern geführten Moden kommt.

Ferner kann der während des Spleißvorgangs auftretende hohe Energieeintrag im Bereich der zu verspleißenden Enden zu einer Veränderung der Führungseigenschaften der Fasern führen, so daß beispielsweise dadurch eine Auskopplung eines Teils der geführten Strahlung in diesem Bereich in unerwünschter Weise auftritt. Dadurch kann eine unzulässig hohe thermische Belastung des Fasermantels, der häufig als Polymerschutzmantel ausgebildet ist, auftreten. Bei Doppelkernfasern, bei denen der Faserkern einen inneren Signalkern und einen diesen umgebenden Pumpkern aufweist, kann sich die aus dem inneren Signalkern ausgekoppelte Strahlung im Pumpkern über lange Strecken ausbreiten. Für das Erreichen einer gewünschten Strahlqualität ist jedoch häufig erforderlich, daß am Ende der gesamten Faserstrecke nur Strahlung aus dem inneren Signalkern austritt, so daß die in dem Pumpkern geführte Strahlung die Strahlqualität verschlechtert.

Druckschrift DE 4102 582 offenbart ein Verfahren zum Herstellen einer Spleißverbindung zwischen zwei Fasern mit einer Stützhülse welche nicht am Fasermantel anliegt.

Druckschrift US 6 428 217 offenbart ein Verfahren zum Herstellen einer Spleißverbindung mit einer Vergussmasse, welche das Ausleiten von Strahlung aus der Faser ermöglicht.

Druckschrift DE 34 07 862 offenbart ein Verfahren zum Herstellen einer Spleißverbindung mit einer nach dem Spleißvorgang aufschrumpfbaren Hülse.

Druckschrift JP 61 219 010 offenbart ein Verfahren zum Herstellen einer Spleißverbindung mit mehreren aufschrumpfbaren Hülsen. Ausgehend hiervon ist es Aufgabe der Erfindung, eine verbesserte Spleißverbindung zwischen zwei optischen Fasern bereitzustellen. Ferner soll ein entsprechendes Verfahren zur Herstellung einer solchen Spleißverbindung bereitgestellt werden.

Erfindungsgemäß wird die Aufgabe gelöst durch ein Verfahren zum Herstellen einer Spleißverbindung gemäß Anspruch 1 zwischen zwei optischen Fasern, die jeweils einen Faserkern und einen an diesem anliegenden Fasermantel aufweisen, bei der bei zumindest einer ersten der beiden Fasern der Fasermantel in einem Verbindungsbereich, der sich vom verspleißten Ende der jeweiligen Faser in Faserlängsrichtung entlang einer vorbestimmten Länge erstreckt, vollständig entfernt ist, und bei der eine Stützhülse vorgesehen ist, in der die verspleißten Enden der beiden Fasern angeordnet sind und die sich zumindest entlang des gesamten Verbindungsbereiches der ersten Faser sowie darüber hinaus über den Fasermantel der ersten Faser erstreckt, wobei die Stützhülse mit ihrem sich über den Fasermantel der ersten Faser erstreckenden Abschnitt nicht am Fasermantel der ersten Faser anliegt und im Verbindungsbereich der ersten Faser direkt oder über eine Zwischenhülse mit dem Faserkern der ersten Faser mechanisch verbunden ist. Durch den mechanischen Kontakt der Stützhülse mit dem Faserkern der ersten Faser kann eine mechanische Stabilisierung der Spleißverbindung erreicht werden, so daß ein unerwünschtes Biegen des Faserkerns der ersten Faser verhindert wird. Die Stützhülse kann ferner die Spleißverbindung noch vor Kontaminationen schützen, da sie sich über den Mantel der ersten Faser erstreckt. Des weiteren wird bei der erfindungsgemäßen Spleißverbindung der Fasermantel bei der Ausbildung der Spleißverbindung thermisch nicht belastet, da die Stützhülse nicht am Fasermantel selbst anliegt und mit dieser auch nicht verbunden werden muß.

Unter Mantel der optischen Faser wird hier insbesondere der Teil der Faser bezeichnet, der thermisch nicht belastbar und daher vor Verspleißen der Faserenden von der Faser entfernt wird. Der Mantel im Sinne der Erfindung ist somit insbesondere der Schutzmantel der optischen Faser. Der Kern der Faser ist hier insbesondere der verbleibende Teil der Faser. Der Faserkern dient insbesondere zur Führung von Licht, wobei er unterschiedlich aufgebaut sein kann, um die angestrebte Führungsfunktion für das Licht zu erreichen. Er umfaßt typisch den signalführenden Kern (z.B. aus Glasmaterial) und den diesen umgebenden Mantel aus Glasmaterial, der die Führung des Lichts im Signalkern sicherstellt. Bei Doppelkernfasern stellt der Mantel beispielsweise dabei den sogenannten Pumpkern dar, in dem in diesem sogenanntes Pumplicht geführt wird. Als Faserkern wird hier also insbesondere der Teil der optischen Faser bezeichnet, der verbleibt, wenn der Schutzmantel entfernt wird, wobei dieser Faserkern typisch aus Glasmaterialien unterschiedlicher Dotierung, ggf. auch mit eingeschlossenen Hohlräumen besteht.

Bei einer Single-Kern-Faser sind hier der Kern der Single-Kern-Faser und der Mantel der Single-Kern-Faser der Faserkern im Sinne der Erfindung und der Mantel ist der Schutzmantel der Single-Kern-Faser im Sinne der Erfindung.

Bei zum Beispiel einer Doppelkernfaser bilden der Kern und das sogenannte Cladding den Kern im Sinne der Erfindung und ist der Mantel der Doppelkernfaser der Mantel im Sinne der Erfindung. Natürlich kann es vorkommen, daß auch das Cladding entfernt werden soll. In diesem Fall bilden Cladding und Mantel der Doppelkernfaser den Mantel im Sinne der Erfindung und ist der Kern der Doppelkernfaser der Kern im Sinne der Erfindung. Gleiches gilt für Fasern mit zum Beispiel Dreifach- oder Vierfachkern oder für sonstige Fasern, die zumindest einen Kern und einen Mantel aufweisen.

Insbesondere wird als Faserkern der Teil der Faser bezeichnet, der z.B. aus Glas ist und bestimmungsgemäß das Licht bzw. die elektromagnetische Strahlung führt. Hierbei handelt es sich insbesondere um elektromagnetische Strahlung des sichtbaren Spektrums (z. B. 380nm bis 780nm) sowie des angrenzenden infraroten elektromagnetischen Spektrums (780nm bis 2500nm).

Die Stützhülse ist bevorzugt als steife bzw. starre Stützhülse ausgebildet, die den gewünschten Schutz gegen Biegungen und Knickungen bereitstellt.

Die Stützhülse kann aus dem gleichen Material wie der Faserkern hergestellt sein. Insbesondere kann die Stützhülse aus Quarzglas hergestellt sein.

Die mechanische Verbindung zwischen Stützhülse und Zwischenhülse oder Faserkern ist insbesondere eine formschlüssige und/oder stoffschlüssige Verbindung. Gleiches gilt für die Verbindung der Zwischenhülse mit dem Faserkern.

Die mechanische Verbindung kann insbesondere durch einen lokalen Wärmeeintrag hergestellt sein. Dazu kann insbesondere Laserstrahlung verwendet werden, so daß die Stützhülse bzw. die Zwischenhülse auf den Faserkern aufgeschmolzen ist.

Bei der erfindungsgemäßen Spleißverbindung kann der sich über den Fasermantel der ersten Faser erstreckende Abschnitt der Stützhülse bis auf eine eventuell vorgesehene stirnseitige Abdichtung nicht mechanisch mit dem Fasermantel verbunden sein. Dadurch wird der Vorteil erreicht, daß kein Wärmeeintrag in diesem Abschnitt notwendig ist, wodurch eine thermische Schädigung des Fasermantels verhindert werden kann. Die stirnseitige Abdichtung kann insbesondere aus dem gleichen Material hergestellt sein wie das Material des Fasermantels (z.B. Polymermaterial).

Die Stützhülse kann einen Innendurchmesser in dem Bereich, in dem die mechanische Verbindung vorliegt, aufweisen, der kleiner ist als der Innendurchmesser des sich über den Fasermantel der ersten Faser erstreckenden Abschnittes. Somit kann die Stützhülse einen sich ändernden Innendurchmesser aufweisen. Insbesondere ist die Wandstärke der Stützhülse konstant. Sie kann jedoch auch entlang ihrer Längsrichtung variieren.

Bei der erfindungsgemäßen Spleißverbindung kann bei beiden Fasern der Fasermantel im jeweiligen Verbindungsbereich vollständig entfernt sein, kann sich die Stützhülse entlang des gesamten Verbindungsbereichs der zweiten Faser sowie darüber hinaus über den Fasermantel der zweiten Faser erstrecken, wobei die Stützhülse mit ihrem sich über den Fasermantel der zweiten Faser erstreckenden Abschnitt nicht am Fasermantel der zweiten Faser anliegt. Mit einer solchen Stützhülse ist eine ausgezeichnete mechanische Stabilität der Spleißverbindung sichergestellt. Ferner kann die Spleißverbindung gut gegen Kontamination geschützt werden.

Die Stützhülse kann im Verbindungsbereich der zweiten Faser direkt oder über eine Zwischenhülse mit dem Faserkern der zweiten Faser mechanisch verbunden sein. Insbesondere ist es möglich, daß mechanische Verbindungen sowohl im Verbindungsbereich der ersten Faser als auch im Verbindungsbereich der zweiten Faser vorliegen. Insbesondere kann die mechanische Verbindung sich über die verspleißten Enden erstrecken.

Der sich über den Fasermantel der zweiten Faser erstreckende Abschnitt der Stützhülse kann in vorteilhafter Weise bis auf eine eventuell vorgesehene stirnseitige Abdichtung nicht mechanisch mit dem Fasermantel verbunden sein.

Bei der direkten mechanischen Verbindung der Stützhülse mit dem Faserkern kann die Brechzahl der Stützhülse so gewählt sein, daß über die direkte Verbindung im Faserkern geführtes Licht in die Stützhülse ausgekoppelt wird. Die Brechzahl der Stützhülse kann dazu konstant sein oder sich räumlich ändern. Wesentlich ist hierbei, daß das im Faserkern geführte Licht zumindest teilweise in die Stützhülse überkoppeln kann.

Bei der mechanischen Verbindung der Stützhülse mit dem Faserkern über die Zwischenhülse können die Brechzahlen (einschließlich eventueller Brechzahlverläufe) von Stützhülse und Zwischenhülse so gewählt sein, daß im Faserkern geführtes Licht über die Zwischenhülse in die Stützhülse ausgekoppelt wird.

Insbesondere kann die Stützhülse als Volumenstreuer ausgebildet sein. Das Material der Stützhülse wirkt also stark streuend auf das eingekoppelte Licht, da z.B. streuende Partikel im Material der Stützhülse enthalten sind. Dadurch kann das ausgekoppelte Licht über einen größeren räumlichen Bereich in die Umgebung abgegeben werden, so daß die thermische Belastung pro Fläche verringert ist.

Die Stützhülse kann zusätzlich oder alternativ als Oberflächenstreuer ausgebildet sein. Dies kann z.B. dadurch realisiert sein, daß die Oberfläche aufgerauht ist.

Auch die Zwischenhülse(n) kann/können als Volumen- und/oder Oberflächenstreuer ausgebildet sein.

Natürlich können die Brechzahl(en) auch so gewählt sein, daß eine Auskopplung von Licht aus dem Faserkern möglichst unterdrückt wird.

Die Stützhülse kann insbesondere als einstückige Stützhülse ausgebildet sein. Auch die zumindest eine Zwischenhülse kann jeweils einstückig ausgebildet sein. Ferner kann die zumindest eine Zwischenhülse aus dem gleichen Material wie die Stützhülse hergestellt sein.

Bei der erfindungsgemäßen Spleißverbindung sind zwischen der Stützhülse und dem freigelegten Faserkern bis auf die eventuell vorgesehene Zwischenhülse bzw. Zwischenhülsen keine weiteren Verbindungsmittel (wie z.B. ausgehärtete Lacke oder Harze, Schrumpfschläuche,...) angeordnet.

Es wird ein Verfahren zum Herstellen einer Spleißverbindung gemäß Anspruch 1 zwischen zwei optischen Fasern, die jeweils einen Faserkern und einen an diesem anliegenden Fasermantel aufweisen, bereitgestellt, bei dem bei zumindest einer ersten der beiden Fasern der Fasermantel in einem Verbindungsbereich, der sich vom zu verspleißenden Ende der jeweiligen Faser in Faserlängsrichtung entlang einer vorbestimmten Länge erstreckt, vollständig entfernt wird, eine Stützhülse über eine der beiden Fasern geschoben wird, die beiden zu verspleißenden Enden der Fasern zueinander ausgerichtet und miteinander verspleißt werden, die Stützhülse danach über die verspleißten Enden so geschoben wird, daß die verspleißten Enden der beiden Fasern in der Stützhülse angeordnet sind und sich die Stützhülse zumindest entlang des gesamten Verbindungsbereiches der ersten Faser sowie darüber hinaus über den Fasermantel der ersten Faser erstreckt, ohne daß sie mit ihrem sich über den Fasermantel der ersten Faser erstreckenden Abschnitt am Fasermantel der ersten Faser anliegt, und die Stützhülse im Verbindungsbereich der ersten Faser direkt oder über eine Zwischenhülse mit dem Faserkern der ersten Faser mechanisch verbunden wird.

Mit dem erfindungsgemäßen Verfahren kann eine Spleißverbindung hergestellt werden, bei der die verspleißten Fasern im Bereich der verspleißten Enden gegen Biegen und Knicken sowie vor Kontaminationen geschützt sind.

Die mechanische Verbindung zwischen Stützhülse und Zwischenhülse oder Faserkern kann als formschlüssige und/oder stoffschlüssige Verbindung ausgebildet werden. Insbesondere kann das Verbinden mittels Wärmeeintrag realisiert werden. Dazu kann insbesondere ein Laser eingesetzt werden.

Bei dem Verfahren kann der sich über den Fasermantel der ersten Faser erstreckende Abschnitt der Stützhülse bis auf eine eventuell durchgeführte stirnseitige Abdichtung nicht mechanisch mit dem Fasermantel verbunden werden. Damit wird der Fasermantel nicht übermäßig thermisch belastet.

Ferner kann bei beiden Fasern der Fasermantel im jeweiligen Verbindungsbereich vollständig entfernt werden, die Stützhülse so über die verspleißten Enden geschoben werden, daß sie sich entlang des gesamten Verbindungsbereichs der zweiten Faser sowie darüber hinaus über den Fasermantel der zweiten Faser erstreckt, ohne daß sie mit ihrem sich über den Fasermantel der zweiten Faser erstreckenden Abschnitt am Fasermantel der zweiten Faser anliegt. Insbesondere kann die Stützhülse im Verbindungsbereich der zweiten Faser direkt oder über eine Zwischenhülse mechanisch mit dem Faserkern der zweiten Faser verbunden sein. Auch ist es möglich, daß der sich über den Fasermantel der zweiten Faser erstreckende Abschnitt der Stützhülse bis auf eine eventuell vorgesehene stirnseitige Abdichtung nicht mechanisch mit dem Fasermantel verbunden wird.

Mit diesen Schritten ist es möglich, eine Spleißverbindung mit den gewünschten Eigenschaften herzustellen.

Ferner kann bei der direkten mechanischen Verbindung von Stützhülse und Faserkern die Brechzahl der Stützhülse so gewählt werden, daß über die direkte Verbindung im Faserkern geführtes Licht in die Stützhülse ausgekoppelt wird. In gleicher Weise können bei der mechanischen Verbindung der Stützhülse mit dem Faserkern über die Zwischenhülse die Brechzahlen von Stützhülse und Zwischenhülse so gewählt werden, daß im Faserkern geführtes Licht über die Zwischenhülse in die Stützhülse ausgekoppelt wird.

Damit ist es möglich, die im Bereich der verspleißten Enden austretende Strahlung sicher nach außen abzuleiten, ohne die Strahlqualität zu verschlechtern und thermische Schäden aufgrund der im Bereich der verspleißten Enden austretenden Strahlung von zum Beispiel des Fasermantels vermeiden.

Bei dem Verfahren kann die Stützhülse als Volumenstreuer und/oder Oberflächenstreuer ausgebildet sein. Gleiches gilt für die Zwischenhülse(n). Ferner ist es möglich, bei dem Verfahren als Stützhülse eine einstückige Stützhülse zu verwenden.

Bei dem erfindungsgemäßen Verfahren kann vor dem Verspleißen der beiden Fasern über eine der beiden Fasern eine Zwischenhülse geschoben werden, die nach dem Verspleißen der beiden Fasern mit dem Faserkern der ersten Faser mechanisch verbunden wird, wobei danach die Stützhülse mechanisch mit der Zwischenhülse verbunden wird. Wenn mehrere Zwischenhülsen vorgesehen werden, werden diese natürlich vor dem Verspleißen der beiden Fasern auf eine der beiden Fasern geschoben und vor dem Verbinden mit der Stützhülse ihrerseits mit dem entsprechenden Faserkern verbunden. Es ist jedoch auch möglich, erst die Stützhülse mit der/den Zwischenhülse(n) und danach die Zwischenhülse(n) mit dem/den Faserkern(en) zu verbinden.

Die mechanische Verbindung der Zwischenhülse(n) mit dem Faserkern(en) erfolgt bevorzugt stoff- und/oder formschlüssig. Insbesondere wird die Verbindung durch einen Wärmeeintrag erzeugt. Dazu kann insbesondere Laserstrahlung eingesetzt werden.

Es versteht sich, daß die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:
- Fig. 1: eine schematische Schnittdarstellung einer Spleißverbindung gemäß eines Beispiels, welches nicht Teil der Erfindung ist;
- Fig. 2-6: Schnittdarstellungen zur Erläuterung der Herstellung der Spleißverbindung von Fig. 1;
- Fig. 7: eine Schnittdarstellung zur Erläuterung einer Abwandlung des Herstellungsverfahrens;
- Fig. 8: eine schematische Schnittdarstellung einer Spleißverbindung gemäß einer Ausführungsform der vorliegenden Erfindung;
- Fig. 9: eine schematische Darstellung einer Spleißverbindung gemäß einer weiteren Ausführungsform;
- Fig. 10: eine schematische Darstellung einer Spleißverbindung gemäß eines weiteren Beispiels, welches nicht Teil der Erfindung ist;
- Fig. 11: eine schematische Darstellung einer Spleißverbindung gemäß einer weiteren Ausführungsform;
- Fig. 12: eine schematische Darstellung einer Spleißverbindung gemäß einer weiteren Ausführungsform;
- Fig. 13: eine schematische Darstellung einer Spleißverbindung gemäß einer weiteren Ausführungsform;
- Fig. 14: eine schematische Darstellung einer Spleißverbindung gemäß einer weiteren Ausführungsform, und
- Fig. 15: eine schematische Schnittdarstellung einer Spleißverbindung gemäß einer weiteren Ausführungsform.

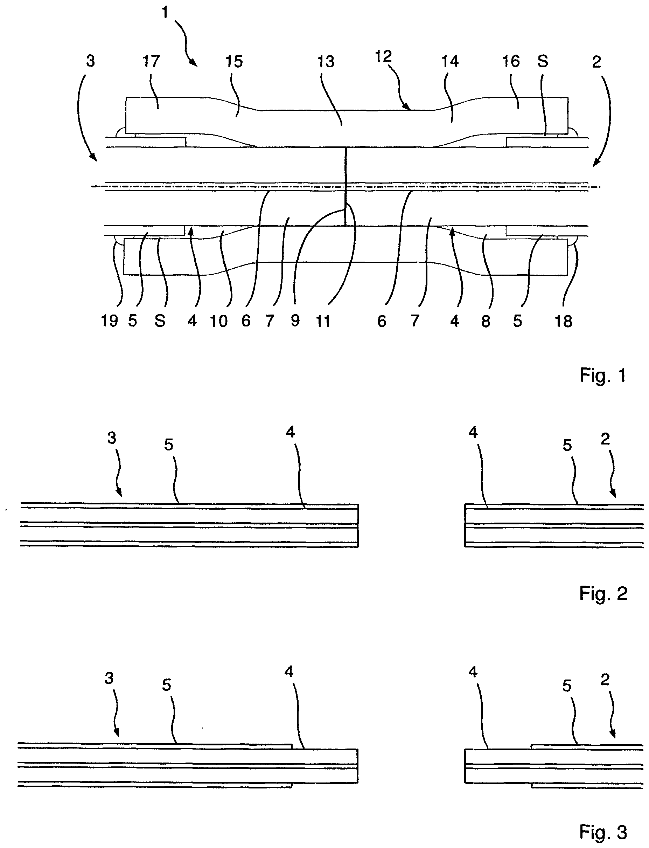

Bei der in Fig. 1 gezeigten Ausführungsform umfaßt die erfindungsgemäße Spleißverbindung 1 eine erste und eine zweite optische Faser 2, 3, die miteinander verspleißt sind. Nachdem die beiden Fasern bzw. Lichtwellenleiter 2, 3 den gleichen Aufbau aufweisen, wird nachfolgend lediglich die erste Faser 2 im Detail beschrieben.

Die Darstellung in Figur 1 sowie in den nachfolgend noch beschriebenen Figuren ist nicht maßstabstreu, um die Übersichtlichkeit der Figuren zu verbessern. Ferner wurde in Figur 1 sowie in den nachfolgenden Figuren die üblicherweise verwendeten Schraffuren weitgehend weggelassen, um die Schnittdarstellungen übersichtlich darstellen zu können.

Die erste Faser 2 weist einen Faserkern 4 sowie einen den Faserkern 4 umgebenden Schutz- bzw. Fasermantel 5 auf. Der Faserkern 4 umfaßt einen inneren Signalkern 6, der von einem Signalkernmantel 7 (nachfolgend auch nur als Mantel 7 bezeichnet) umgeben ist. Der Faserkern 4 besteht aus Quarzglas, das für den Signalkern 6 und den Mantel 7 unterschiedlich dotiert ist, so daß aufgrund des dadurch erzeugten Brechzahlsprungs zwischen Signalkern 6 und Mantel 7 Signallicht im Signalkern 6 geführt werden kann.

Der Fasermantel 5 ist als Polymerschutzmantel 5 ausgebildet, dessen Brechzahl so gewählt ist, daß, sofern gewünscht, Licht im Mantel 7 geführt werden kann.

Wie in Fig. 1 ersichtlich ist, ist der Fasermantel 5 in einem ersten Verbindungsbereich 8, der sich von dem verspleißten Ende 9 der ersten Faser 2 entlang der Längsrichtung der ersten Faser 2 um eine vorbestimmte Länge (hier ca. 10 mm) erstreckt, vollständig entfernt, so daß im ersten Verbindungsbereich 8 der Signalkernmantel 7 freigelegt ist. Ferner kann Fig. 1 entnommen werden, daß in einem zweiten Verbindungsbereich 10, der sich von dem verspleißten Ende 11 der zweiten Faser 3 in Längsrichtung entlang einer vorbestimmten Länge (hier wiederum ca. 10 mm) erstreckt, vollständig entfernt ist, so daß auch bei der zweiten Faser 3 innerhalb des zweiten Verbindungsbereiches 10 der Signalkernmantel 7 vollständig freigelegt ist.

Die Spleißverbindung 1 umfaßt noch eine aus Quarzglas hergestellte Stützhülse 12, die sich über beide Verbindungsbereiche 8, 10 sowie jeweils seitlich darüber hinaus erstreckt. Die Stützhülse 12 weist eine weitgehend konstante Wandstärke bzw. -dicke von ca. 30 - 200µm auf, wobei jedoch ihr Innendurchmesser in Längsrichtung variiert. So weist die Stützhülse 12 einen Mittelabschnitt 13 mit einem ersten Innendurchmesser auf, an dem an beiden Seiten jeweils ein Verbindungsabschnitt 14, 15 mit größer werdendem Innendurchmesser anschließt, die dann jeweils in einen Randabschnitt 16, 17 mit konstantem Innendurchmesser übergehen, der größer ist als der Innendurchmesser des Mittelabschnittes 13.

Der Mittelabschnitt 13 ist form- und stoffschlüssig mit den Faserkernen 4 bzw. den Signalkernmänteln 7 der beiden Fasern 2, 3 verbunden, wohingegen die beiden Randabschnitte 16 und 17, die sich über die Fasermäntel 5 erstrecken, von diesen beabstandet sind, da der Innendurchmesser der Randabschnitte 16 und 17 so gewählt ist, daß er (geringfügig) größer ist als der Außendurchmesser der Fasermäntel 5. Zwischen den Randabschnitten 16, 17 und dem jeweiligen Fasermantel 5 ist somit ein Spalt S. Die Innenseite der Randabschnitte 16, 17 liegt daher nicht an dem jeweiligen Fasermantel 5 an.

Um die Verbindungsbereiche 8 und 10 vor Kontaminationen zu schützen, ist an beiden axialen Enden der steifen bzw. starren Stützhülse 12 ein aus dem gleichen Material wie die Fasermäntel 5 gebildeter Ring 18, 19 aufgebracht, der den Spalt S zwischen dem jeweiligen Randabschnitt 16 und 17 und den Fasermänteln 5 abdichtet. Somit liegt mit Ausnahme der Ringe 18, 19 keine Verbindung der Randabschnitte 16, 17 mit dem jeweiligen Fasermantel 5 und daher der entsprechenden Faser 2, 3 vor.

Die Stützhülse 12, die auch als Stützrohr bezeichnet werden kann, ist somit eine taillierte Stützhülse 12, da der Innendurchmesser des Mittelabschnittes 13 kleiner ist als der Innendurchmesser der Randabschnitte 16, 17.

Durch die form- und stoffschlüssige Verbindung zwischen dem Mittelabschnitt 13 der Stützhülse 12 und den Faserkernen 4 in den Verbindungsbereichen 8 und 10 wird die Spleißverbindung 1 der beiden Fasern 2, 3 mechanisch stabilisiert und gegen ein unerwünschtes Biegen oder Knicken geschützt. Dieser Biege- bzw. Knickschutz wird noch dadurch erhöht, daß die beiden Randabschnitte 16, 17 die Polymerschutzmäntel 5 überlappen.

Bei den in Fig. 1 gezeigten Fasern 2, 3 handelt es sich um sogenannte Single-Kern-Fasern (Einzel-Kern-Fasern). Die Fasern 2, 3 von Fig. 1 können jedoch auch als Doppel-Kern-Fasern ausgebildet sein. In diesem Fall stellt der Faserkernmantel 7 den sogenannten Pumpkern 7 dar, in dem Pumplicht geführt wird. Dazu weist der Schutzmantel 5 insbesondere eine solche Brechzahl auf, daß die Führung des Pumplichtes gewährleistet werden kann.

Die Brechzahl des Quarzglases, aus dem die Stützhülse 12 hergestellt ist, ist so gewählt, daß sie gleich oder größer ist als die Brechzahl des Faserkernmantels 7 oder des Pumpkerns 7, um die in den Faserkernmänteln 7 bzw. Pumpkernen 7 der Fasern 2, 3 geführte Strahlung absichtlich aus den Fasern 2, 3 herauslenken zu können. Die Brechzahl des Quarzglases der Stützhülse 12 kann konstant sein oder räumlich variieren.

Ferner kann die Stützhülse 12 so ausgebildet sein, daß sie die Eigenschaft eines Volumenstreuers aufweist. Dies kann beispielsweise dadurch realisiert werden, daß streuende Partikel im Quarzglas der Stützhülse 12 eingeschlossen sind. Zusätzlich oder alternativ kann die äußere Stützhülsenoberfläche streuende Eigenschaften aufweisen (beispielsweise dadurch, daß sie aufgerauht ist), so daß die aus den Fasern 2, 3 gelenkte Strahlung über eine längere Strecke verteilt in die Umgebung gestreut bzw. abgestrahlt werden kann und nicht mit hoher Leistungsdichte aus der Stützhülsenstirnfläche austritt.

Bei der Ausbildung der in Fig. 1 gezeigten Fasern 2, 3 als Doppelkernfasern, bei denen sich die Strahlung nicht nur innerhalb des inneren Signalkerns 6, sondern auch innerhalb des Pumpkerns 7 ausbreitet, ist es für das Erreichen einer gewünschten Strahlqualität häufig erforderlich, daß am Ende der gesamten Faserstrecke nur Strahlung aus dem inneren Signalkern 6 austritt. Bei der erfindungsgemäßen Spleißverbindung 1 kann vorteilhafterweise im Bereich der verspleißten Enden 9, 11, also innerhalb der beiden Verbindungsbereiche 8, 10, Strahlung aus dem Pumpkern 7 über die Stützhülse 12 aus den Fasern herausgelenkt werden.

Wenn die erste Faser 2 beispielsweise eine aktive Doppelkernfaser ist, kann mittels der erfindungsgemäßen Stützhülse 12 das während der Ausbreitung im Faserkern 4 nicht vom inneren Signalkern 6 der ersten Faser 2 absorbierte Pumplicht im Bereich der verspleißten Enden 9, 10 am Ende der aktiven Doppelkernfaser 2 vorteilhaft aus der Faser 2 herausgelenkt werden, wodurch eine unzulässig hohe thermische Belastung der Faserstrecke bzw. der zweiten Faser 3 hinter der aktiven Faser 2 verhindert wird.

Alternativ kann die Brechzahl des Quarzglases der Stützhülse 12 so gewählt werden, daß sie kleiner ist als die Brechzahl des Faserkernmantels 7 oder des Pumpkernes 7. Dadurch wird im Bereich der Verbindungsbereiche 8 und 10 durch den Mittelabschnitt 13 z.B. das Führen von Pumplicht in den Pumpkernen 7 fortgeführt, so daß mit der erfindungsgemäßen Spleißverbindung das Pumplicht quasi ohne Leistungsverlust von der ersten Faser 2 auf die zweite Faser 3 übertreten kann. Bevorzugt ist die Brechzahl des Quarzglases der Stützhülse 12 gleich oder kleiner als die Brechzahl des Polymerschutzmantels 5.

Die in Fig. 1 gezeigte Spleißverbindung 1 kann wie folgt hergestellt werden. Von den beiden Enden der zu verspleißenden Fasern 2, 3 (Fig. 2), die jeweils z.B. durch Brechen einer Faser erzeugt werden, wird jeweils der Fasermantel 5 der jeweiligen Faser 2, 3 entlang der vorbestimmten Länge entfernt. Dies kann beispielsweise durch Schneiden mit einem Laser (z.B. Femtosekundenlaser), durch Ätzen oder durch Ritzen und Brechen durchgeführt werden. Die zu verspleißenden Enden der beiden Fasern 2, 3 werden gereinigt, poliert oder anderweitig präpariert, sofern notwendig.

Falls gewünscht, können die freigelegten Faserkerne jeweils erneut gebrochen bzw. abgeschnitten und gegebenenfalls poliert werden, um ein zu verspleißendes Ende zu erzeugen, das die gewünschten Eigenschaften aufweist. Dies kann z.B. durch Schneiden mit einem Laser (z.B. Femtosekundenlaser) oder durch Ritzen und Brechen durchgeführt werden.

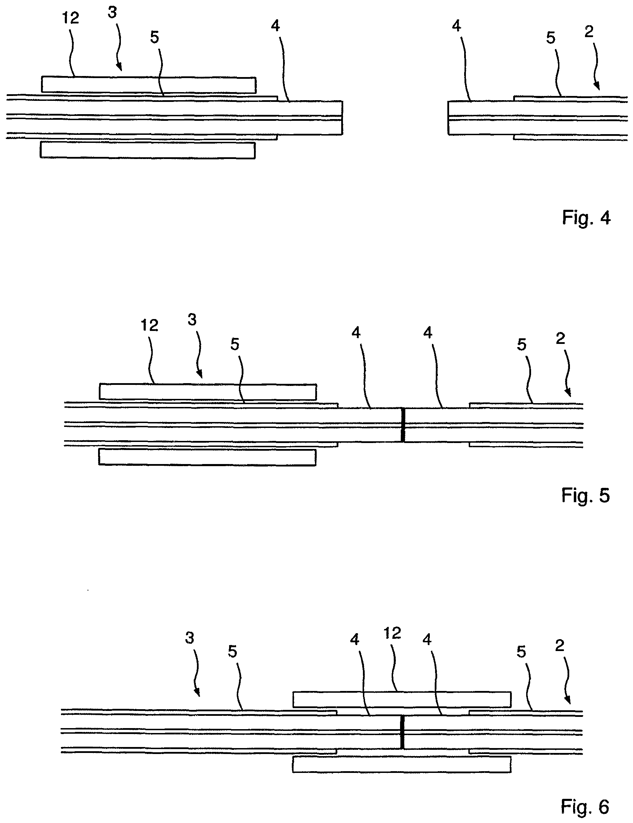

Nachdem die Faserkerne 4 so freigelegt wurden (Fig. 3), wird über eine der beiden Fasern 2, 3 die Stützhülse 12 geschoben. Bei dem hier beschriebenen Ausführungsbeispiel wird sie über die zweite Faser 3 soweit geschoben, daß sie sich nicht über den freigelegten Faserkern 4 erstreckt, sondern vollständig im Bereich des noch vorhandenen Fasermantels 5 liegt (Fig. 4).

Die Stützhülse 12 kann auch vor dem Freilegen des Faserkerns 4 oder nach dem Freilegen des Faserkerns 4, aber vor dem Präparieren des zu verspleißenden Endes, über die zweite Faser 3 geschoben werden.

Danach werden die beiden freien Enden der Faserkerne in bekannter Weise zueinander ausgerichtet und verspleißt (Fig. 5).

Nach dem Verspleißen wird die Stützhülse 12 so über die verspleißten Enden 9, 11 geschoben, daß sie sich auf beiden Seiten über die Verbindungsbereiche 8, 10 hinauserstreckt und somit die Fasermäntel 5 überlappt (Fig. 6). In diesem Zustand wird dann der Mittelabschnitt 13 der Stützhülse 12 auf die freigelegten Faserkerne durch einen Schmelzprozeß aufgeschrumpft (kollabiert), so daß eine form- und stoffschlüssige Verbindung entsteht. Dabei bleiben die Verbindungsabschnitte 14, 15 sowie die Randabschnitte 16, 17 von dem Schmelzprozeß ausgeschlossen, damit keine thermische Schädigung des Polymerschutzmantels 5 eintritt.

Danach werden die Ringe 18 und 19 ausgebildet und, sofern gewünscht, wird die äußere Manteloberfläche der Stützhülse 12 aufgerauht, so daß man die in Fig. 1 gezeigte Spleißverbindung erhält. Das Aufrauhen der äußeren Manteloberfläche kann natürlich auch in einem früheren Schritt oder sogar vor dem Aufschieben auf die zweite Faser 3 durchgeführt werden.

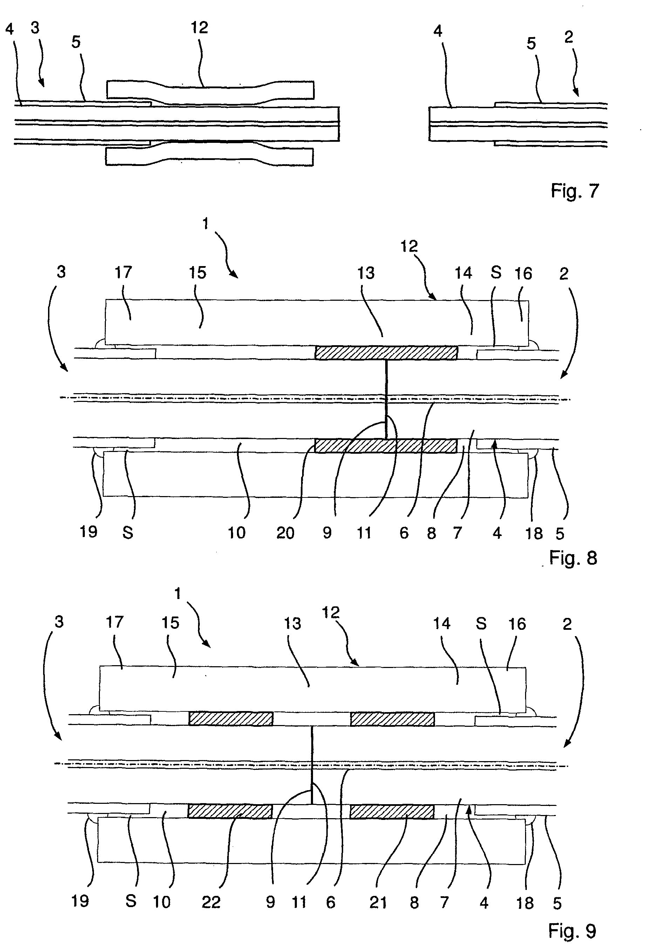

Um den notwendigen Wärmeeintrag beim Kollabieren des Mittelabschnittes 13 auf die Faserkerne 4 zu minimieren, kann die Stützhülse 12 schon so weit vorgefertigt sein, daß die notwendigen Durchmesseränderungen beim Kollabieren auf die Faserkerne minimal sind. In diesem Fall kann es vorkommen, daß der Innendurchmesser des Mittelabschnitts 13 bereits geringer ist als der Außendurchmesser des Fasermantels 5 der zweiten Faser 3. Falls dies vorliegt, kann die Stützhülse 12 nicht, wie in Fig. 4 gezeigt ist, vollständig über den Fasermantel 5 geschoben werden, sondern nur teilweise, wie in Fig. 7 angedeutet ist. Ansonsten entsprechen die Schritte zur Herstellung der Spleißverbindung den in Fig. 2 bis 6 gezeigten Schritten.

In Fig. 8 ist eine zweite Ausführungsform der erfindungsgemäßen Spleißverbindung 1 gezeigt, die sich von der in Fig. 1 gezeigten Ausführungsform dadurch unterscheidet, daß der Innendurchmesser der Stützhülse 12 über ihre gesamte Länge weitgehend konstant ist. Ferner ist eine starre bzw. steife Zwischenhülse 20 aus Quarzglas vorgesehen, die form- und stoffschlüssig mit den beiden Faserkernen 4 im Bereich der verspleißten Enden 9, 11 verbunden ist. Die Stützhülse 12 ist ihrerseits form- und stoffschlüssig mit der äußeren Manteloberfläche der Zwischenhülse 20 verbunden. Somit liegt über die Zwischenhülse 20 eine mechanische Verbindung zwischen der Stützhülse 12 und den Faserkernen 4 vor. Die Randabschnitte 16, 17 der Stützhülse 12, die die Fasermäntel 5 überlappen, sind in gleicher Weise wie bei der Ausführungsform von Fig. 1 von den Fasermänteln 5 beabstandet.

In der Schnittdarstellung von Fig. 8 ist zur Vereinfachung der Darstellung lediglich die Zwischenhülse 20 schraffiert dargestellt. Auch bei der Beschreibung der nachfolgenden Ausführungsbeispiele werden zur Vereinfachung der Darstellung lediglich die Zwischenhülsen schraffiert dargestellt.

Bei der Herstellung der Spleißverbindung von Fig. 8 werden vor dem Verspleißen der beiden Fasern 2, 3 natürlich sowohl die Zwischenhülse 20 als auch die Stützhülse 12 über eine der beiden Fasern 2, 3 geschoben. Dabei können beide Hülsen 12, 20 über dieselbe Faser 2, 3 oder die Zwischenhülse 20 über eine der beiden Fasern 2, 3 und die Stützhülse über die andere der beiden Fasern 2, 3 geschoben werden.

Nach dem Verspleißen der beiden Fasern 2, 3 wird dann zunächst die Zwischenhülse 20 in die in Fig. 8 gezeigte Stellung gebracht und auf die Faserkerne 4 kollabiert. Danach wird die Stützhülse 12 in die in Fig. 8 gezeigte Stellung gebracht und auf die Zwischenhülse kollabiert.

In Fig. 9 ist eine Abwandlung der in Fig. 8 gezeigten Spleißverbindung gezeigt. Im Unterschied zu der Spleißverbindung von Fig. 8 sind bei Fig. 9 zwei Zwischenhülsen 21, 22 angeordnet, wobei jeweils eine der Zwischenhülsen 21 und 22 in jeweils einem der beiden Verbindungsbereiche 8 und 10 liegt. Die Zwischenhülsen 21 und 22 sind bis auf ihre geometrischen Abmessungen in gleicher Weise wie die Zwischenhülse 20 ausgebildet und wiederum form- und stoffschlüssig mit den entsprechenden Faserkernen 4 verbunden. Die Stützhülse 12 ist form- und stoffschlüssig mit den beiden Zwischenhülsen 21 und 22 verbunden. Auch bei dieser Ausführungsform wie bei den nachfolgenden Ausführungsformen werden zunächst die Zwischenhülsen mit den Faserkernen und danach die Stützhülse mit den Zwischenhülsen verbunden.

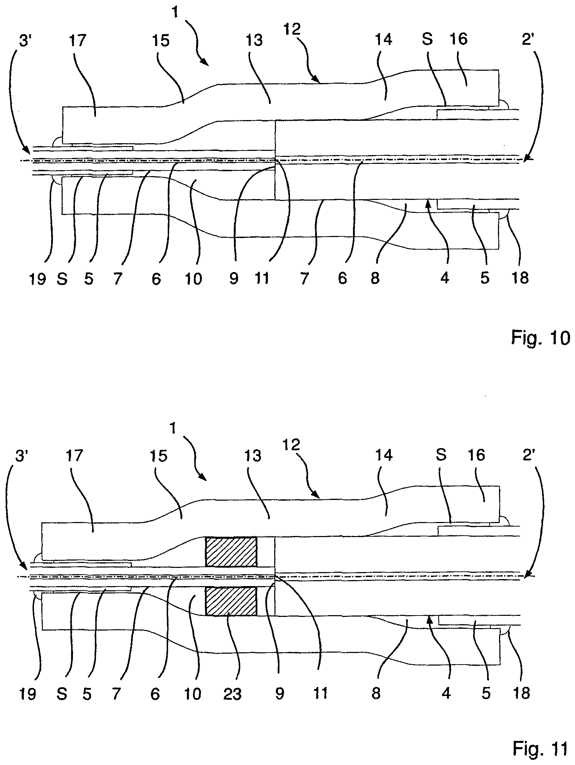

In Fig. 10 ist ein Ausführungsbeispiel gezeigt, bei dem zwei Fasern 2', 3' mit stark unterschiedlichen Durchmessern miteinander verspleißt sind. Die Fasern 2' und 3' sind grundsätzlich in gleicher Weise aufgebaut wie die Fasern 2 und 3 der in Verbindung mit Figuren 1 bis 9 beschriebenen Ausführungsbeispielen.

Die Stützhülse 12 verjüngt sich bei dem Ausführungsbeispiel von Fig. 10 stufenweise von der dickeren Faser 2' zur dünneren Faser 3' hin. Somit weisen in diesem Ausführungsbeispiel die beiden Randabschnitte 16 und 17 der Stützhülse 12 unterschiedliche Innendurchmesser auf, die an die jeweiligen Außendurchmesser der beiden Fasern 2' und 3' angepaßt sind. Auch bei diesem Ausführungsbeispiel ist der Innendurchmesser des jeweiligen Randabschnittes 16, 17 stets (etwas) größer als der jeweilige Außendurchmesser der Fasermäntel 5 der entsprechenden Faser 2', 3'.

Ferner ist die Stützhülse 12 im Mittelabschnitt 13 form- und stoffschlüssig mit dem Faserkernmantel 7 bzw. dem Pumpkern 7 der Faser 2' verbunden. Im Falle der Ausbildung als Pumpkern 7 kann so z.B. die gewünschte Auskopplung des Pumplichtes gewährleistet werden.

In Fig. 11 ist eine Abwandlung der Ausführungsform von Fig. 10 gezeigt, die sich nur dadurch unterscheidet, daß zwischen dem Mittelabschnitt 13 der Stützhülse 12 im zweiten Verbindungsbereich 10 und der Faser 3' eine Zwischenhülse 23 angeordnet ist, die form- und stoffschlüssig mit dem Faserkern 4 der Faser 2' verbunden ist. Die Zwischenhülse 23 ist bis auf ihre geometrischen Abmessungen in gleicher Weise ausgebildet wie die Zwischenhülse 20. Der Mittelabschnitt 13 der Stützhülse 12 ist seinerseits wiederum form- und stoffschlüssig mit der Zwischenhülse 23 verbunden.

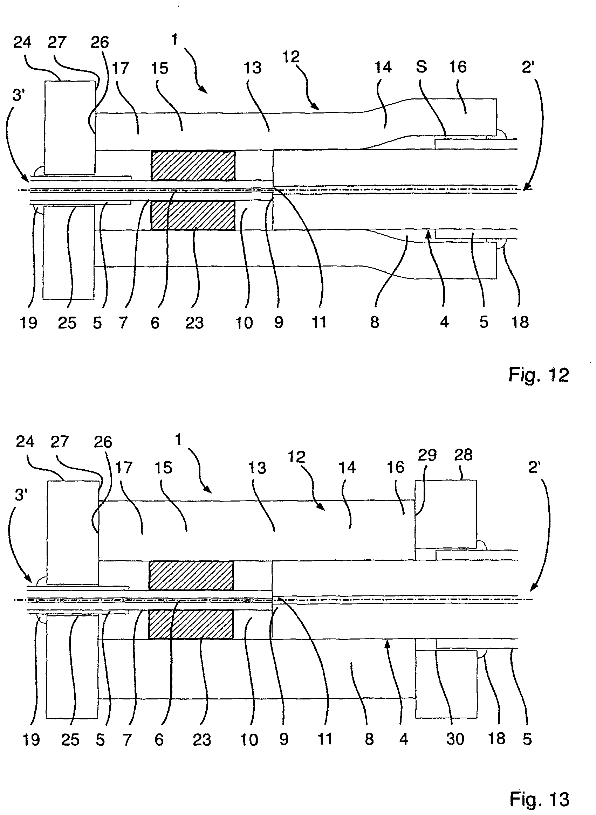

In Fig. 12 ist eine Abwandlung der Ausführungsform von Fig. 11 gezeigt, bei der der Mittelabschnitt 13 sowie der Verbindungsabschnitt 15 und der Randabschnitt 17 den gleichen Innendurchmesser aufweisen. Ferner ist eine Stützscheibe 24 vorgesehen, die eine Mittelbohrung 25 mit einem Innendurchmesser aufweist, der größer ist als der Außendurchmesser des Fasermantels 5 der Faser 3'. Des weiteren weist die Stützscheibe 24 einen solchen Außendurchmesser auf, daß die linke Stirnseite 26 der Stützhülse 12 an der der Stützhülse 12 zugewandten Innenseite 27 der Stützscheibe 24 anliegt. Die Stirnseite 26 ist mit der Innenseite 27 form- sowie stoffschlüssig verbunden. Aufgrund des konstanten Innendurchmessers von Mittelabschnitt 13, Verbindungsabschnitt 15 und Randabschnitt 17 kann die axiale Länge der Zwischenhülse 23 größer gewählt werden als dies in der Ausführungsform von Fig. 11 möglich ist.

Durch die stoffschlüssige Verbindung von Stützhülse 12 und Stützscheibe 24 bilden sie zusammen eine zweiteilige Stützhülse.

Bei der in Fig. 13 gezeigten Abwandlung der Spleißverbindung von Fig. 12 ist eine zweite Stützscheibe 28 vorgesehen, die form- und stoffschlüssig mit der rechten Stirnseite 29 der Stützhülse 12 verbunden ist, wobei die zweite Stützscheibe 28 eine Mittelbohrung 30 aufweist, deren Innendurchmesser etwas größer ist als der Außendurchmesser des Fasermantels 5 der Faser 2'. Bei dieser Ausführungsform kann die Stützhülse 12 somit über ihre gesamte Länge einen konstanten Innendurchmesser aufweisen. Somit kann sie im Vergleich zu Fig. 12 über eine größere Länge form- und stoffschlüssig mit dem Faserkern 4 der ersten Faser 2' verbunden werden. Die Stützhülse 12 zusammen mit beiden Stützscheiben 24 und 28 bilden eine dreiteilige Stützhülse.

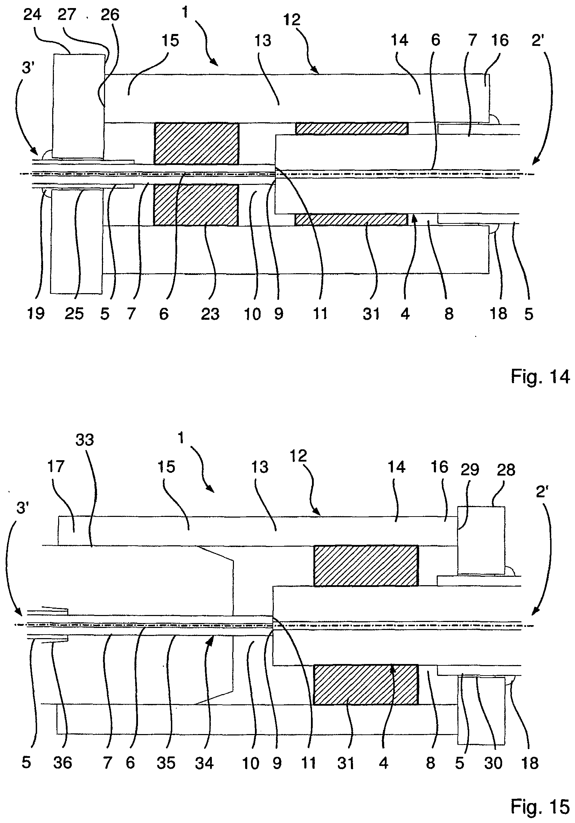

In Fig. 14 ist eine weitere Abwandlung der Ausführungsform von Fig. 12 gezeigt. Bei dieser Abwandlung weist die Stützhülse 12 wiederum einen konstanten Innendurchmesser über ihre gesamte Länge auf. Der Innendurchmesser ist dabei so gewählt, daß er etwas größer ist als der Außendurchmesser des Fasermantels 5 der Faser 2'. Zur Verbindung der Stützhülse 12 mit dem Faserkern 4 der Faser 2' ist eine weitere Zwischenhülse 31 vorgesehen, die form- und stoffschlüssig mit dem Faserkern 4 der ersten Faser 2' verbunden ist. Die Zwischenhülse 31 ist bis auf ihre geometrischen Abmessungen in gleicher Weise wie die Zwischenhülse 20 ausgebildet. Die Stützhülse 12 ist jeweils form- und stoffschlüssig mit der Zwischenhülse 31 und der Zwischenhülse 23 verbunden.

In Fig. 15 ist eine Ausgestaltung der erfindungsgemäßen Spleißverbindung gezeigt, bei der die Stützhülse 12 wiederum einen konstanten Innendurchmesser über ihre gesamte Länge aufweist. Die rechte Stirnseite 29 der Stützhülse 12 ist form- und stoffschlüssig mit einer Stützscheibe 32 verbunden, die in gleicher Weise ausgebildet sein kann wie die zweite Stützscheibe 28 gemäß Fig. 13. Die zweite Faser 3' ist in einer Ferrule 33 (Aderendhülse für Lichtleitfasern) geführt, wobei die Ferrule 33 eine gestufte Mittelbohrung 34 aufweist, die von ihrem rechten Ende einen ersten Abschnitt 35 mit konstantem erstem Innendurchmesser, der dem Außendurchmesser des Faserkerns 7 der zweiten Faser 3' entspricht, und einen sich daran anschließenden zweiten Abschnitt 36, mit einem sprungartig größeren zweiten Innendurchmesser, der zusätzlich nach links gehend anwächst, aufweist, der zumindest etwas größer ist als der Außendurchmesser des Fasermantels 5 der zweiten Faser 2'.

Der Außendurchmesser der Ferrule 33 ist so gewählt, daß die Stützhülse 12 form- und stoffschlüssig mit der Ferrule 33 verbunden werden kann.

Ferner ist eine Zwischenhülse 31 vorgesehen, die bis auf ihre geometrische Abmessung der Zwischenhülse von Fig. 14 entspricht. Die Zwischenhülse 31 ist form- und stoffschlüssig mit dem Faserkern 4 der ersten Faser 2' verbunden und die Stützhülse 12 ist form- und stoffschlüssig mit der Zwischenhülse 31 verbunden.

Die in Fig. 12-15 gezeigten Stützscheiben 24 und 28 sind bevorzugt aus dem gleichen Material hergestellt wie die Stützhülse 12. Gleiches gilt für die Ferrule 33.

## Patentansprüche

1. Verfahren zum Herstellen einer Spleißverbindung zwischen zwei optischen Fasern, die jeweils einen Faserkern (4) und einen an diesem anliegenden Fasermantel (5) aufweisen, bei dem bei zumindest einer ersten der beiden Fasern (2, 3) der Fasermantel (5) in einem Verbindungsbereich, (8, 10) der sich vom zu verspleißenden Ende (9, 11) der jeweiligen Faser (2, 3) in Faserlängsrichtung entlang einer vorbestimmten Länge erstreckt, vollständig entfernt wird, eine Zwischenhülse (20-23, 31) im Verbindungsbereich über den Faserkern der ersten Faser geschoben wird,
eine Stützhülse (12) über eine der beiden Fasern geschoben wird, die beiden zu verspleißenden Enden der Fasern zueinander ausgerichtet und miteinander verspleißt werden,
die Zwischenhülse danach im Verbindungsbereich (8, 10) mechanisch mit dem Faserkern der ersten Faser verbunden wird,
die Stützhülse danach über die verspleißten Enden so geschoben wird, daß die verspleißten Enden der beiden Fasern (2, 3) in der Stützhülse (12) angeordnet sind und sich die Stützhülse zumindest entlang des gesamten Verbindungsbereiches der ersten Faser sowie darüber hinaus über den Fasermantel der ersten Faser erstreckt, ohne daß sie mit ihrem sich über den Fasermantel der ersten Faser erstreckenden Abschnitt am Fasermantel (5) der ersten Faser anliegt, und die Stützhülse (12) im Verbindungsbereich der ersten Faser über die Zwischenhülse mit dem Faserkern (4) der ersten Faser mechanisch verbunden wird, wobei die Brechzahlen von Stützhülse und Zwischenhülse so gewählt werden, daß im Faserkern geführtes Licht über die Zwischenhülse in die Stützhülse auskoppelbar ist.

2. Verfahren nach Anspruch 1, bei dem als Stützhülse eine als Volumenstreuer und/oder Oberflächenstreuer ausgebildete Stützhülse verwendet wird.

3. Verfahren nach Anspruch 1 oder 2, bei dem als Zwischenhülse eine als Volumenstreuer ausgebildete Zwischenhülse verwendet wird.

4. Verfahren nach einem der Ansprüche 1 bis 3, bei dem die mechanische Verbindung zwischen Stützhülse und Zwischenhülse als formschlüssige Verbindung und/oder als stoffschlüssige Verbindung ausgebildet wird.

5. Verfahren nach einem der obigen Ansprüche, bei dem der sich über den Fasermantel der ersten Faser erstreckende Abschnitt der Stützhülse bis auf eine eventuell durchgeführte stirnseitige Abdichtung nicht mechanisch mit dem Fasermantel verbunden wird.

6. Verfahren nach einem der obigen Ansprüche, bei dem als Stützhülse eine einstückige Stützhülse verwendet wird.

7. Verfahren nach einem der obigen Ansprüche, bei dem bei beiden Fasern der Fasermantel im jeweiligen Verbindungsbereich vollständig entfernt wird, die Stützhülse so über die verspleißten Enden geschoben wird, daß sie sich entlang des gesamten Verbindungsbereichs der zweiten Faser sowie darüber hinaus über den Fasermantel der zweiten Faser erstreckt, ohne daß sie mit ihrem sich über den Fasermantel der zweiten Faser erstreckenden Abschnitt am Fasermantel der zweiten Faser anliegt.

8. Verfahren nach Anspruch 7, bei dem die Stützhülse im Verbindungsbereich der zweiten Faser direkt oder über eine Zwischenhülse mechanisch mit dem Faserkern der zweiten Faser verbunden wird.

9. Verfahren nach Anspruch 7 oder 8, bei dem der sich über den Fasermantel der zweiten Faser erstreckende Abschnitt der Stützhülse bis auf eine eventuell vorgesehene stirnseitige Abdichtung nicht mechanisch mit dem Fasermantel verbunden wird.

10. Verfahren nach einem der obigen Ansprüche, bei dem vor dem Verspleißen der beiden Fasern über eine der beiden Fasern eine Zwischenhülse geschoben wird, die nach dem Verspleißen der beiden Fasern mit dem Faserkern der ersten Faser mechanisch verbunden wird, wobei danach die Stützhülse mechanisch mit der Zwischenhülse verbunden wird.

## Claims

1. Method for producing a spliced joint between two optical fibres, which each have a fibre core (4) and a fibre sheath (5) that lies against the latter, in which,
in the case of at least a first of the two fibres (2, 3), the fibre sheath (5) is completely removed in a connection region (8, 10) that extends along a predetermined length from the end (9, 11) of the respective fibre (2, 3) that is to be spliced, in the longitudinal direction of the fibre,
in the connection region, an intermediate sleeve (20-23, 31) is pushed over the fibre core of the first fibre,
a support sleeve (12) is pushed over one of the two fibres,
the two ends of the fibres that are to be spliced are aligned to each other and spliced to each other, the intermediate sleeve is then mechanically connected to the fibre core of the first fibre in the connection region (8,10),
the support sleeve is then pushed over the spliced ends such that the spliced ends of the two fibres (2, 3) are disposed in the support sleeve (12), and the support sleeve extends at least along the entire connection region of the first fibre and therebeyond, over the fibre sheath of the first fibre, without the portion of the support sleeve that extends over the fibre sheath of the first fibre lying against the fibre sheath (5) of the first fibre and,
in the connection region of the first fibre, the support sleeve (12) is mechanically connected to the fibre core (4) of the first fibre via the intermediate sleeve,
wherein the refractive indices of the support sleeve and intermediate sleeve are selected such that light guided in the fibre core can be coupled out, into the support sleeve, via the intermediate sleeve.

2. Method according to claim 1, in which a support sleeve realized as a volume scatterer and/or surface scatterer is used as the support sleeve.

3. Method according to claim 1 or 2, in which an intermediate sleeve realized as a volume scatterer is used as the intermediate sleeve.

4. Method according to any of claims 1 to 3, in which the mechanical connection between the support sleeve and the intermediate sleeve is a form-locking and/or a material-bonding connection.

5. Method according to any of the above claims, in which the portion of the support sleeve that extends over the fibre sheath of the first fibre, apart from a possibly effected end-face sealing, is not mechanically connected to the fibre sheath.

6. Method according to any of the above claims, in which a single-piece support sleeve is used as the support sleeve.

7. Method according to any of the above claims, in which the fibre sheath is completely removed in the respective connection region in the case of both fibres, the support sleeve is pushed over the spliced ends such that it extends along the entire connection region of the second fibre and therebeyond, over the fibre sheath of the second fibre, without the portion of the support sleeve that extends over the fibre sheath of the second fibre lying against the fibre sheath of the second fibre.

8. Method according to claim 7, in which, in the connection region of the second fibre, the support sleeve is mechanically connected to the fibre core of the second fibre, either directly or via an intermediate sleeve.

9. Method according to claim 7 or 8, in which the portion of the support sleeve that extends over the fibre sheath of the second fibre, apart from a possibly provided end-face sealing, is not mechanically connected to the fibre sheath.

10. Method according to any of the above claims, in which an intermediate sleeve is pushed over one of the two fibres before the splicing of the two fibres, which intermediate sleeve is mechanically connected to the fibre core of the first fibre after the splicing of the two fibres, wherein the support sleeve is then mechanically connected to the intermediate sleeve.

## Revendications

1. Procédé de fabrication d'une épissure entre deux fibres optiques qui présentent chacune une âme de fibre (4) et une enveloppe de fibre (5) s'appliquant sur celle-ci, dans lequel,
pour au moins une première des deux fibres (2, 3), l'enveloppe de fibres (5) est complètement enlevée dans une région de connexion (8, 10) qui s'étend depuis l'extrémité à épissurer (9, 11) de la fibre respective (2, 3) dans la direction longitudinale de la fibre le long d'une longueur prédéterminée, une douille intermédiaire (20-23, 31), dans la région de connexion, est enfilée par-dessus l'âme de fibre de la première fibre,
une douille de support (12) est enfilée par-dessus l'une des deux fibres,
les deux extrémités des fibres à épissurer sont alignées l'une avec l'autre et sont épissurées ensemble,
la douille intermédiaire est ensuite connectée mécaniquement à l'âme de fibre de la première fibre dans la région de connexion (8, 10),
la douille de support est ensuite enfilée par-dessus les extrémités épissurées de telle sorte que les extrémités épissurées des deux fibres (2, 3) soient disposées dans la douille de support (12) et que la douille de support s'étende au moins le long de toute la région de connexion de la première fibre et en outre sur l'enveloppe de fibre de la première fibre, sans s'appliquer avec sa portion s'étendant sur l'enveloppe de fibre de la première fibre contre l'enveloppe de fibre (5) de la première fibre, et
la douille de support (12), dans la région de connexion de la première fibre, est connectée mécaniquement par le biais de la douille intermédiaire à l'âme de fibre (4) de la première fibre,
les indices de réfraction de la douille de support et de la douille intermédiaire étant choisis de telle sorte que la lumière guidée dans l'âme de fibre puisse être découplée par le biais de la douille intermédiaire dans la douille de support.

2. Procédé selon la revendication 1, dans lequel on utilise en tant que douille de support une douille de support réalisée sous forme de diffuseur volumique et/ou sous forme de diffuseur superficiel.

3. Procédé selon la revendication 1 ou 2, dans lequel on utilise en tant que douille intermédiaire une douille intermédiaire réalisée sous forme de diffuseur volumique.

4. Procédé selon l'une quelconque des revendications 1 à 3, dans lequel la connexion mécanique entre la douille de support et la douille intermédiaire est réalisée sous forme de connexion par engagement positif et/ou sous forme de connexion par liaison de matière.

5. Procédé selon l'une quelconque des revendications précédentes, dans lequel la portion de la douille de support s'étendant sur l'enveloppe de fibre de la première fibre n'est pas connectée mécaniquement à l'enveloppe de fibre à l'exception d'un joint d'étanchéité frontal éventuellement réalisé.

6. Procédé selon l'une quelconque des revendications précédentes, dans lequel on utilise en tant que douille de support une douille de support d'une seule pièce.

7. Procédé selon l'une quelconque des revendications précédentes, dans lequel, dans le cas des deux fibres, l'enveloppe de fibre est complètement enlevée dans la région de connexion respective, la douille de support est enfilée sur les extrémités épissurées de telle sorte qu'elle s'étende le long de toute la région de connexion de la deuxième fibre et en outre sur l'enveloppe de fibre de la deuxième fibre sans qu'elle ne s'applique avec sa portion s'étendant sur l'enveloppe de fibre de la deuxième fibre contre l'enveloppe de fibre de la deuxième fibre.

8. Procédé selon la revendication 7, dans lequel la douille de support est connectée mécaniquement, directement ou par le biais d'une douille intermédiaire, à l'âme de fibre de la deuxième fibre dans la région de connexion de la deuxième fibre.

9. Procédé selon la revendication 7 ou 8, dans lequel la portion de la douille de support s'étendant sur l'enveloppe de fibre de la deuxième fibre n'est pas connectée mécaniquement à l'enveloppe de fibre à l'exception d'un joint d'étanchéité frontal éventuellement prévu.

10. Procédé selon l'une quelconque des revendications précédentes, dans lequel, avant l'épissurage des deux fibres, une douille intermédiaire est enfilée sur l'une des deux fibres, laquelle, après l'épissurage des deux fibres, est connectée mécaniquement à l'âme de fibre de la première fibre, et la douille de support étant ensuite connectée mécaniquement à la douille intermédiaire.
